Europäisches Patentamt

European Patent Office

Office européen des brevets

(11) Veröffentlichungsnummer: **0 325 084 B1**

(12) **EUROPÄISCHE PATENTSCHRIFT**

(45) Veröffentlichungstag der Patentschrift: **11.11.92**

(21) Anmeldenummer: **88710002.2**

(22) Anmeldetag: **19.01.88**

Die Akte enthält technische Angaben, die nach
dem Eingang der Anmeldung eingereicht wurden
und die nicht in dieser Patentschrift enthalten sind.

(51) Int. Cl.⁵: **C08G 63/66**, C08G 63/54,
C08G 63/676

(54) **Ungesättigte Polyesterharze mit guter Stryrolverträglichkeit.**

(43) Veröffentlichungstag der Anmeldung:
**26.07.89 Patentblatt 89/30**

(45) Bekanntmachung des Hinweises auf die
Patenterteilung:
**11.11.92 Patentblatt 92/46**

(84) Benannte Vertragsstaaten:
**CH DE ES FR GB IT LI NL**

(56) Entgegenhaltungen:
**EP-A- 0 179 702**
**FR-A- 2 353 587**
**NL-A- 7 705 205**
**US-A- 4 663 393**

**Polyesters, Vol. 2, B. Barkyn, F. Lamb and**
**B.V. Clifton, London Iliffe Books Ltd., New**
**York, Seiten 31 - 33,**

(73) Patentinhaber: **BASF Aktiengesellschaft**
**Carl-Bosch-Strasse 38**
**W-6700 Ludwigshafen(DE)**

(72) Erfinder: **Hesse, Anton, Dr.**
**Peter-Nickel-Strasse 15**
**W-6940 Weinheim(DE)**
Erfinder: **Holoch, Jan, Dr.**
**Koenigsberger Strasse 22 a**
**W-6906 Leimen(DE)**
Erfinder: **Lagaly, Werner**
**Alfred-Delp-Strasse 9**
**W-6710 Frankenthal(DE)**

EP 0 325 084 B1

**Beschreibung**

Ein wichtiges Einsatzgebiet ungesättigter Polyesterharze sind SMC- und BMC-Formulierungen. SMC (sheet molding compound)-Massen sind flächige Halbzeuge aus glasmattenverstärkten Polyesterharzen, die verformt und gehärtet werden. BMC (bulk molding compound)-Massen sind mit Füllstoffen und Kurzfasern verstärkte Polyesterharze, die durch Spritzguß verarbeitet und gehärtet werden. Zur Herstellung solcher Massen wird das Harz mit einem Thermoplast (Antischrumpfkomponente), Glasfasern, Füllstoffen und einem Erdalkalioxid oder - hydroxid als Eindickmittel abgemischt. Danach wird das Harz eingedickt, wobei im Fall des SMC ein lederartiges Halbzeug erhalten wird, das verformt oder im Spritzguß verarbeitet und zu Formteilen gehärtet werden kann.

Die Eigenschaften des Formteils sind wesentlich von der Homogenität der Halbzeugmasse abhängig. Problematisch sind in dieser Hinsicht Phasentrennungen, die beim Zusammengeben der styrolischen Lösungen von ungesättigten Polyesterharzen und Thermoplasten auftreten. Bei vielen ungesättigten Polyesterharzen werden schon dann Phasentrennungen beobachtet, wenn die Styrolmenge erhöht wird. Ein Maß für die Kompatibilität eines UP-Harzes mit Thermoplasten in styrolischer Lösung ist die sogenannte Styrolverträglichkeit, die definiert ist als die maximale Menge (in g) Styrol, die zu 10 g UP-Harz hinzugefügt werden kann, bis Trübung, d.h. Phasentrennung, auftritt.

Es ist bekannt, daß die Styrolverträglichkeit eines ungesättigten Polyesterharzes von seiner Zusammensetzung abhängt. So sind z.B. UP-Harze mit einem hohen Diethylenglykolgehalt schlecht mit Styrol verträglich, wohingegen UP-Harze mit hohem Dipropylenglykolgehalt unbegrenzt mit Styrol mischbar sind. Verwendet man jedoch ausschließlich Dipropylenglykol als Alkoholkomponente, so erhält man sehr weiche Polyester mit zu geringer Wärmestandfestigkeit und zu niedrigem Elastizitätsmodul. Überraschend wurde nun gefunden, daß bei UP-Harzen aus Maleinsäure, Phthalsäure, Propylenglykol und Dipropylenglykol, wenn bestimmte Mengenverhältnisse der Komponenten vorliegen, die Styrolverträglichkeit bei gegebener Zusammensetzung durch die Reaktionsführung entscheidend verbessert werden kann.

Bei der erfindungsgemäßen zweistufigen Arbeitsweise werden zunächst Phthalsäure oder Phthalsäureanhydrid und ein Glykolüberschuß (molares Verhältnis Glykole zu Phthalsäure vorzugsweise zwischen 2:1 und 22:1) bis zu einer niedrigen Säurezahl (vorzugsweise kleiner 30, insbesondere kleiner 10) verestert. Dabei wird entweder nur ein Glykol oder ein Gemisch aus Propylenglykol und Dipropylenglykol eingesetzt, vorzugsweise 10 bis 100 % der Gesamtglykolmenge. Im zweiten Reaktionsschritt werden Maleinsäure, Fumarsäure oder Maleinsäureanhydrid mit dem eventuell noch vorhandenen Rest an Glykolen zur Reaktionsmischung hinzugefügt. Die Kondensation wird fortgesetzt, bis die gewünschten UP-Kenndaten erreicht sind. Bevorzugt sind Polyester mit Säurezahlen zwischen 10 und 40; Hydroxylzahlen zwischen 10 und 60 und Schmelzviskositäten bei 150 ° C von 300 bis 1500 mPa x s.

Der ungesättigte Polyester wird anschließend in einer copolymerisierbaren Vinylverbindung gelöst. 0,005 bis 0,5 Gew.% eines Inhibitors werden zum Harz hinzugefügt.

Eine Verbesserung der Styrolverträglichkeit des Harzes durch das beschriebene zweistufige Herstellverfahren wird nur dann beobachtet, wenn folgende Bedingungen für die molaren Verhältnisse der Komponenten gelten:

a) Maleinsäure : Phthalsäure = 1 : 0,05 bis 1 : 0,45

b) Maleinsäure : Dipropylenglykol = 1 : 0,05 bis 1 : 0,6

Ist der Gehalt an Phthalsäure oder Dipropylenglykol niedriger, so wird durch das zweistufige Herstellverfahren die Styrolverträglichkeit nicht verbessert, ist er höher, so ist auch bei konventioneller einstufiger Reaktionsführung die Styrolverträglichkeit bereits ausgezeichnet, so daß sich die zeitlich etwas aufwendigere zweistufige Arbeitsweise nicht lohnt (vgl. Beispiel 7 - 12). Das Molverhältnis Propylenglykol : Dipropylenglykol sollte vorzugsweise zwischen 1:1,4 und 1:0,03 liegen.

Die gut styrolverträglichen ungesättigten Polyesterharze können verstärkt oder unverstärkt verarbeitet werden. Besonders geeignet sind sie als Grundharze für SMC- und BMC- Formulierungen, in denen unerwünschte Phasentrennungen reduziert werden. Das Harz wird dazu mit Antischrumpfkomponenten, Eindickmitteln, Peroxiden, faserförmigen Verstärkungsmitteln, Füllstoffen sowie üblichen Zusatzstoffen versetzt.

Zu den Komponenten ist folgendes zu sagen:

A) Der ungesättigte Polyester ist aus Maleinsäure, Phthalsäure, Propylenglykol und Dipropylenglykol aufgebaut. Dabei müssen die Komponenten in den oben beschriebenen Verhältnissen eingesetzt werden. Der ungesättigte Polyester wird zweistufig durch Schmelzkondensation bei Temperaturen zwischen 150 und 220 ° C hergestellt.

B) Als copolymerisierbare, ethylenisch ungesättigte monomere Verbindungen kommen die üblicherweise zum Herstellen ungesättigter Polyesterformmassen verwendeten Allyl- und vorzugsweise Vinylverbindun-

2

gen in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester, wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Polyesterformmassen im allgemeinen in einer Menge von 10 bis 80, vorzugsweise von 20 bis 70 Gew.%, bezogen auf das Gesamtgewicht der Komponenten A + B, enthalten.

C) Als Inhibitoren kommen phenolische Verbindungen, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranil, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin sowie deren Gemisch in Frage. Als zusätzliche Stabilisatoren eignen sich auch Salze des zweiwertigen Kupfers, beispielsweise Kupfernaphthenat oder - oktoat und quarternäre Ammoniumsalze.

D) Als Polymerisationsinitiatoren werden übliche, in der Wärme Radikale bildende organische Peroxide in Mengen von 0,1 bis 3 Gew.%, bezogen auf A + B, eingesetzt. Geeignete Initiatoren sind z.B.: Benzoylperoxid, tert.-Butylperoktoat, tert.-Butylperbenzoat, Dicumylperoxid, Di-tert.-Dibutyl-peroxid und Perketale, wie z.B. Trimethylcyclohexanonperketal, sowie Percarbonate. Vorzugsweise sollen die Peroxide eine Halbwertszeit bei 80°C von mehr als 3 h, insbesondere von mehr als 50 h haben. Reaktive Peroxide, z.B. tert.-Butylperoktoat können zusätzlich in untergeordneten Mengen anwesend sein. Auch CC-labile Verbindungen sowie Azoverbindungen sind geeignet.

E) Als Eindickmittel werden Oxide oder Hydroxide des Lithiums, Magnesiums oder Calciums, Aluminiums oder Titans eingesetzt. Bevorzugt ist Magnesiumoxid. Die Verdickungsmittel werden den Formmassen in Mengen von 0,2 bis 5, vorzugsweise von 0,5 bis 3 Gew.%, bezogen auf A + B, zugesetzt.

F) Als Verstärkungsfasern kommen in Frage anorganische oder organische Fasern als Rovings oder flächige, gegebenenfalls daraus gewebte Gebilde, wie Matten, z.B. aus Glas, Kohlenstoff, Asbest, Cellulose und synthetischen organischen Fasern, wie Polycarbonsäureester, Polycarbonate und Polyamide.

Die Verstärkungsfasern werden in Mengen von 5 bis 400, vorzugsweise 10 bis 250 Gew.%, bezogen auf die Komponenten A + B, verwendet.

G) Geeignete Füllstoffe sind z.B. übliche feinpulvrige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen. Sie werden in Mengen von 0 bis 250 Gew.%, vorzugsweise 20 bis 150 Gew.%, bezogen auf A + B, eingesetzt.

H) Als schrumpfmindernde Polymerisate kommen Polystyrol, Polymethylmethacrylat, Polyvinylacetat, Polyethylen, Polybutadien, Polyisopren, Celluloseester, Polyvinylchlorid und entsprechende Copolymere und Propfcopolymere, wie z.B. schlagzähes Polystyrol, in Frage. Sie werden vorzugsweise als 30 bis 40 gew.%ige Lösungen in Monomeren B eingesetzt.

Es eignen sich auch Kondensationspolymere, wie gesättigte Polyester oder Polyesterurethane, die in der Komponente A löslich sind und bei der Warmhärtung eine disperse Phase bilden. Die schrumpfmindernden Zusätze werden in Mengen von 0 bis 30 Gew.%, vorzugsweise 3 bis 20 Gew.%, bezogen auf A + B, eingesetzt. Als elastifizierende Zusätze, die zusätzlich auch schrumpfmindernd wirken, eignen sich kautschukartige Blockcopolymere, insbesondere solche aus 40 bis 95 Gew.% eines Diolefins, z.B. Butadien, Isopren oder Chloropren, und 60 bis 5 Gew.% eines Vinylaromaten, z.B. Styrol oder p-Methylstyrol.

I) Als weitere übliche Zusatzstoffe kommen in Frage:
- Gleitmittel, wie Zink-, Magnesium- und Calciumstearat sowie Polyalkylenetherwachse.
- Paraffine zur Verminderung der Monomerenverdunstung und zur Ausbildung einer klebfreien Oberfläche.
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin.
- Eindickungsbeschleuniger, z.B. Ammoniumchloride, Phosphoniumchloride, Sulfoniumhalogenide, Wasser, Polyole oder Propandiol-1,2.

Die in folgenden Beispielen genannten Teile und Prozente beziehen sich auf das Gewicht. Die Styrolverträglichkeit wurde titrimetrisch bestimmt; zum ungesättigten Polyesterharz wurde soviel Styrol hinzudosiert, bis Trübung auftrat. Die Styrolverträglichkeit wird angegeben in g Styrol pro 10 g Harz.
Die Beispiele 2, 4 und 6 sind erfindungsgemäß.

Beispiel 1 (Vergleich)

392 Teile Maleinsäureanhydrid, 30 Teile Phthalsäureanhydrid, 274 Teile Propylenglykol und 123 Teile Dipropylenglykol werden unter Rühren und Darüberleiten von Stickstoff innerhalb von 2 Stunden auf 200°C erhitzt. Bei dieser Temperatur wird weitere 7 Stunden bis zu einer Säurezahl von 26 verestert. 700 Teile des so erhaltenen ungesättigten Polyesters werden nach Zugabe von 0,11 Teilen Hydrochinon bei Temperaturen um 120°C in 393 Teilen Styrol gelöst.
Styrolverträglichkeit des Harzes: 59

Beispiel 2

Beispiel 1 wird wiederholt, jedoch wird Maleinsäureanhydrid zunächst nicht zum Reaktionsgemisch hinzugefügt. Phthalsäureanhydrid und die Glykole werden 12 Stunden bei 200°C bis Säurezahl 2 verestert, wobei die Glykole mit einem Dephlegmator zurückgehalten werden. In der 2. Stufe wird Maleinsäureanhydrid hinzugefügt, und die Veresterung wird bis Säurezahl 21 fortgesetzt. 700 Teile des Polyesters werden mit 0,11 Teilen Hydrochinon und 393 Teilen Styrol gemischt.
Styrolverträglichkeit: 93

Beispiel 3 (Vergleich)

392 Teile Maleinsäureanhydrid, 59 Teile Phthalsäureanhydrid, 289 Teile Propylenglykol und 123 Teile Dipropylenglykol werden analog Beispiel 1 bis Säurezahl 30 verestert. 700 Teile des ungesättigten Polyesters werden nach Zugabe von 0,11 Teilen Hydrochinon in 393 Teilen Styrol gelöst.
Styrolverträglichkeit: 65

Beispiel 4

59 Teile Phthalsäureanhydrid und 289 Teile Propylenglykol werden unter Rühren und Darüberleiten von Stickstoff bei 200°C innerhalb von 6 Stunden bis Säurezahl 11 verestert. Propylenglykol wird mit einem Dephlegmator zurückgehalten. Anschließend werden 392 Teile Maleinsäureanhydrid und 123 Teile Dipropylenglykol hinzugefügt. Die Veresterung wird bis Säurezahl 30 fortgesetzt. 700 Teile des ungesättigten Polyesters werden mit 0,11 Teilen Hydrochinon und 393 Teilen Styrol gemischt.
Styrolverträglichkeit: 470

Beispiele 5 - 12 sind in Tabelle 1 zusammengefaßt.

4

Tabelle

| Beispiel | Stufe I | SZ_I | Stufe II | SZ_II | Styrol [1] | Hydrochinon [ppm] | Styrolverträglichkeit |
|---|---|---|---|---|---|---|---|
| 5 | 392 T. MSA, 178 T. PSA, 349 T. III, 123 T. 2-III | 27 | - | - | 36 | 100 | 234 |
| 6 | 178 T. PSA, 349 T. III | 9 | 392 T. MSA, 123 T. 2-III | 25 | 36 | 100 | >1000 |
| 7 | 392 T. MSA, 59 T. PSA, 359 T. III | 26 | - | - | 36 | 100 | 25 |
| 8 | 59 T. PSA, 359 T. III | 2 | 392 T. MSA, | 23 | 36 | 100 | 23 |
| 9 | 392 T. MSA, 15 T. PSA, 274 T. III, 112 T. 2-III | 27 | - | - | 36 | 100 | 33 |
| 10 | 15 T. PSA, 274 T. III | 10 | 392 T. MSA, 112 T. 2-III | 20 | 36 | 100 | 35 |
| 11 | 392 T. MSA, 59 T. PSA, 152 T. III, 365 T. 2-III | 21 | - | - | 36 | 100 | >1000 |
| 12 | 392 T. MSA, 295 T. PSA, 418 T. III, 90 T. 2-III | 29 | - | - | 36 | 100 | >1000 |

MSA: Maleinsäureanhydrid
PSA: Phthalsäureanhydrid
III: Propylenglykol
2-III: Dipropylenglykol
SZ_I: Säurezahl nach der 1. Stufe
SZ_II: Säurezahl nach der 2. Stufe

**Patentansprüche**

1. Verfahren zur Herstellung von ungesättigten Polyesterharzen, aufgebaut aus Maleinsäure, Phthalsäure, Propylenglykol und Dialkylenglykol-Einheiten, mit einem molaren Verhältnis Maleinsäure zu Phthalsäure zwischen 1:0,05 und 1:0,45 und einem molaren Verhältnis Maleinsäure zu dem Dialkylenglykol zwischen 1:0,05 und 1:0,6, wobei in einer ersten Stufe Phthalsäure oder Phthalsäureanhydrid mit einem Überschuß an Glykolen verestert wird, und anschließend in einer zweiten Stufe Fumarsäure, Maleinsäure oder Maleinsäureanhydrid und der eventuell verbliebene Rest der Glykole zugesetzt und verestert werden, dadurch gekennzeichnet, daß als Dialkylenglykol Dipropylenglykol eingesetzt wird.

2. Verwendung der nach Anspruch 1 hergestellten Polyesterharze für Sheet-Molding-Compound- und Bulk-Molding-Compound-Formulierungen.

## Claims

1. A process for preparing unsaturated polyester resins based on maleic acid, phthalic acid, propylene glycol and dialkylene glycol units with a molar ratio of maleic acid to phthalic acid within the range from 1:0.05 to 1:0.45 and a molar ratio of maleic acid to the dialkylene glycol of from 1:0.05 to 1:0.6, in which, in a first stage, phthalic acid or anhydride is esterified with an excess of glycol and then, in a second stage, fumaric acid, maleic acid or anhydride and any remaining glycol are added and esterified, wherein the dialkylene glycol used is dipropylene glycol.

2. The use of the polyester resins prepared as claimed in claim 1 for sheet molding compound and bulk molding compound formulations.

## Revendications

1. Procédé de préparation de résines de polyesters insaturés, se composant de motifs acide maléique, acide phtalique, propylèneglycol et dialkylèneglycol, avec un rapport molaire de l'acide maléique à l'acide phtalique compris entre 1:0,05 et 1:0,45 et un rapport molaire de l'acide maléique au dialkylèneglycol compris entre 1:0,05 et 1:0,6, procédé dans lequel, dans une première étape, de l'acide phtalique ou de l'anhydride phtalique est estérifié avec un excès de glycols, puis, dans une deuxième étape, de l'acide fumarique, de l'acide maléique ou de l'anhydride maléique et le reste éventuel des glycols sont ajoutés et estérifiés, caractérisé en ce qu'on utilise, comme dialkylèneglycol, du dipropylèneglycol.

2. Utilisation des résines de polyesters préparées selon la revendication 1 pour des formulations de Sheet Moulding Compound (mat imprégné de résine) et de Bulk Moulding Compound (masse a mouler de résine renforcée de charges et de fibres courtes).